# EUROPEAN PATENT APPLICATION

(11) **EP 3 662 755 A1**
(43) Date of publication of application: **10.06.2020**
(21) Application number: 18211173.2
(22) Date of filing: 07.12.2018
(51) Int. Cl.: A23C 21/00, A23C 9/142, A23C 21/06

(54) **A MICROPARTICULATED WHEY PROTEIN CONCENTRATE**

(71) Applicant: Agriculture and Food Development Authority (TEAGASC), Co. Carlow (IE)
(72) Inventor: Tobin, John, Co. Cork (IE); Kennedy, Deirdre, Co. Cork (IE); Omarov, Maksim, Cork (IE); McDonagh, Dave, Cork (IE)
(74) Representative: Purdylucey Intellectual Property

(57) **Abstract**

A process for making a microparticulated whey protein concentrate, comprises the steps of providing a liquid whey protein concentrate (WPC), subjecting the liquid WPC to microparticulation to provide a microparticulated WPC, and optionally, drying the microparticulated WPC. The liquid WPC is subjected to diafiltration prior to microparticulation to reduce the level of lactose and minerals in the liquid WPC, which allows greater protein denaturation to occur during microparticulation, and provides a microparticulated whey protein that is UHT stable. Microparticulated whey protein concentrates, and UHT-treated liquid nutritional productscontaining the microparticluated whey protein concentrate, are also described.

## Description

### Field of the Invention

The present invention relates to a microparticulated whey protein product, and in particular a microparticulated whey protein concentrate (WPC). Also contemplated are UHT-treated liquid nutritional products comprising the microparticulated whey protein product.

### Background to the Invention

Microparticulation is a process where whey proteins, by heat treatment, are denaturated and aggregated, i.e. are lumped together, where after the aggregations, as a result of mechanical processing, are divided into smaller particles. As a result of microparticulation, a product will be obtained which can be employed in many different food products. The denaturated whey protein will have another flavour and a different appearance from the original whey protein, which also contributes to the increasing use of whey protein in the food industry. It will be of high protein content and made entirely from milk proteins. Whey is concentrated to WPC (Whey Protein Concentrate) by micro- or ultra-filtration. WPC constitutes the retentate from this process. When WPC is spray dried a powdered form is produced and can also be used for this process when it is reconstituted to the desired protein content.

Both reconstituted powder and liquid WPC streams are used as a base ingredient in microparticulation processes. Microparticulated whey is known to be an ingredient having specific product benefits (enhanced nutritional, functional and organoleptic properties). This is down to the composition of the microparticulated whey streams (high protein) and their properties, namely the size of the protein structure and its ability to impart creaminess/mouthfeel in non-fat and low-fat food applications. Microparticulated whey is especially useful as a fat replacer in food products (yoghurts and cheese), where the microparticulate nature of the protein imparts a creamy mouthfeel on products. It is not often used in beverages, especially beverages that are required to have a long shelf-life at ambient temperature (i.e. UHT drinks), as the high processing temperatures required to impart a long shelf life on the products destabilises whey protein causing the protein to aggregate which in turn causes the UHT product to have a grainy undesirable texture.

It is an object of the invention to overcome at least one of the above-referenced problems.

### Summary of the Invention

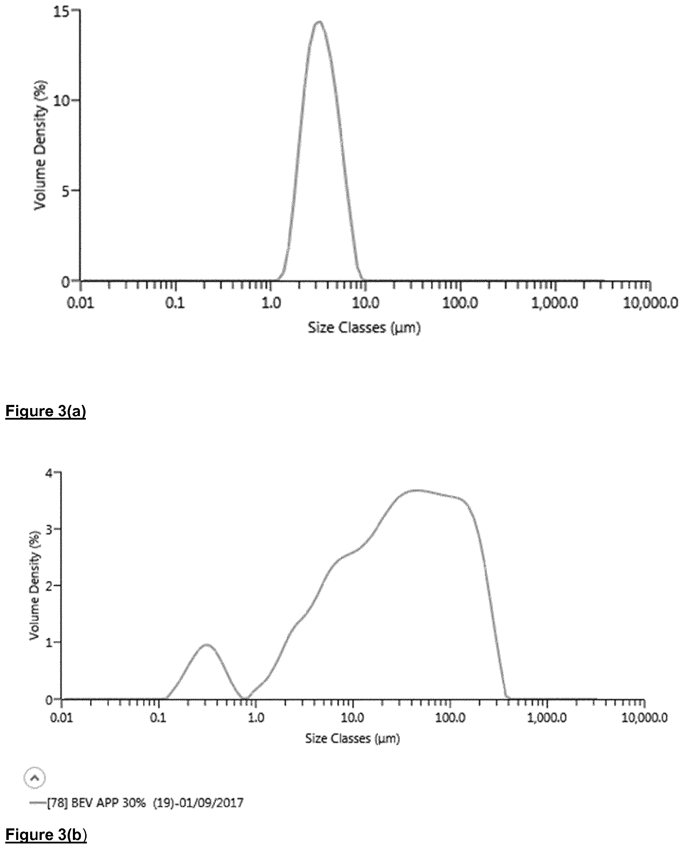

The present invention addresses the need for a UHT stable microparticulated whey product that has the organoleptic properties of conventional microparticulated whey, but in addition is stable when subjected to a UHT treatment. The product is prepared in a process similar to conventional processes, but is characterised by subjecting the concentrated whey protein stream (retentate) to a diafiltration step prior to the microparticulation step. The Applicant has discovered that the diafiltration step causes a reduction in the level of lactose and minerals in the whey stream, allowing a greater level of protein denaturation (degree of denaturation) to be achieved during microparticulation, and thereby reducing the propensity of the microparticulated whey to denature and aggregate during subsequent heat processing. This increases the stability of the microparticulated whey, and liquid nutritional products containing the microparticulated whey, rendering them more stable to heat processing and allowing microparticulated whey to be used as an ingredient in UHT products. This is evidenced in the data provided herein, especially Figs 3(a) and 3(b), which show that diafiltration of WPC prior to microparticulation stabilises the whey protein during subsequent UHT treatment preventing coagulation.

According to a first aspect of the present invention, there is provided a process for making a microparticulated whey protein concentrate, comprising the steps of
a providing a liquid whey protein concentrate;
subjecting the liquid whey protein concentrate to microparticulation to provide a microparticulated liquid whey protein concentrate; and
optionally, drying the microparticulated liquid whey protein concentrate, characterised in that the liquid whey protein concentrate is subjected to diafiltration prior to microparticulation to reduce the level of lactose and minerals in the liquid whey protein concentrate.

Data provided below shows that diafiltration of the liquid whey protein concentrate prior to microparticulation significantly increases the level of denaturation in the concentrate, and helps maintain the whey particle size during subsequent heat treatment preventing significant coagulation.

The microparticulated whey protein concentrate produced by the process of the invention may be in liquid form or dry form.

In one embodiment, the liquid whey protein concentrate employed in the process of the invention has a protein concentration of about 5-15%, about 9-13%, about 9-11% or about 10%. When the liquid whey protein concentrate is formed by reconstitution from a whey protein powder, the whey protein powder typically has a whey protein concentration of at least 50%, 60%, 70%, 80% or 90% (w/w).

In one embodiment, the process comprises an initial step of concentration of a liquid whey (i.e. liquid whey obtained from a cheesemaking process) by microfiltration or ultrafiltration to provide the liquid WPC.

In another embodiment, the process comprises a step of reconstitution of a WPC powder to provide the liquid WPC.

In one embodiment, the microparticulation step is carried out at a temperature of about 83°C for a time of 90 seconds. It will be appreciated that the time and temperature may be varied, for example a longer time with a lower temperature, and such variations will be apparent to the person skilled in the art.

In one embodiment, the diafiltration step comprises diluting the liquid WPC with water and then ultrafiltration of the diluted WPC. Typically, the WPC is diluted to a liquid whey protein concentration level (i.e. the concentration prior to microfiltration/ultrafiltration, and then ultrafiltered until the protein concentration is raised back to the pre-dilution level.

In one embodiment, the average particle size of whey particles in the microparticulated whey protein product is 1-10 µm. Particle size is generally determined using a Mastersizer 3000 laser diffraction particle size analyser.

In one embodiment, the diafiltration step comprises diluting the liquid whey protein (i.e. diluting the liquid WPC), and then re-concentrating the diluted whey protein by means of ultra-filtration or micro-filtration. Typically, the dilution step involves diluting the whey protein to a protein concentration level of the pre-concentrated liquid whey stream (i.e. liquid whey from cheesemaking). Typically, the re-concentration step involves concentrating the diluted liquid whey to the pre-dilution level (i.e. the protein concentration of the WPC).

In another aspect, the invention provides a microparticulated whey protein concentrate formed according to a process of the invention.

In another aspect, the invention provides a process for making a liquid nutritional product comprising the steps of:
providing a microparticulated whey protein concentrate according to a process of the invention (or according to the invention);
mixing the microparticulated whey protein concentrate with one or more additional ingredients to provide a liquid nutritional product; and
heat treating the liquid nutritional product.

In one embodiment, the liquid nutritional product is a beverage. Examples include dairy beverages, yoghurts, drinking yoghurts and food for special medical purposes such as nutritionally complete enteral liquid formulations. Other examples of liquid nutritional products are provided below.

In one embodiment, the liquid nutritional product is a ultra-high treatment (UHT) product, wherein the heat treatment step is a UHT treatment step.

In another aspect, the invention provides a liquid nutritional product (i.e. a UHT product) formed according to a process of the invention.

In one embodiment, the one or more additional ingredients are selected from an additional protein source, carbohydrate, and fat. In one embodiment, the one or more additional ingredients includes an additional protein source, carbohydrate, and fat. In one embodiment, the additional protein source is a dairy protein, for example skim milk protein. In another aspect, the invention provides a microparticulated whey protein concentrate comprising whey protein agglomerates having an average particle size of 1-10 µm.

In one embodiment, the microparticulated WPC has a level of protein denaturation that is greater than the same microparticulated WPC that has not been subject to diafiltration prior to microparticulation, for example at least 5%, 7.5% or 10% greater.

In one embodiment, the microparticulated WPC is in powder form.

In one embodiment, the microparticulated WPC is UHT stable.

In one embodiment, the liquid microparticulated WPC typically has a protein concentration of about 5-15%, about 9-13%, and preferably about 10%.

In another aspect, the invention provides a nutritional composition, in particular a liquid nutritional product, comprising a microparticulated WPC according to the invention (or formed according to a process of the invention). In one embodiment, the nutritional composition is a heat treated composition, and in one embodiment, a UHT treated composition. In one embodiment, the composition is a heat-stable composition. In one embodiment, the nutritional composition is a UHT stable composition. Examples of nutritional compositions include foods and beverages, for example dairy products including milk, milk replacer, yoghurt, cheese, protein drinks, fruit juices, soy milk, soups, sauces, alcoholic drinks, nutritional supplements, milk drinks, ice cream, smoothies, milk shakes. In one embodiment, the nutritional composition comprises 1-99%, 1-75% or 1-50% microparticulated whey protein product, for example 10-40%, 10-30%, 20-40%, 20-30%, or 25-35% (w/w).

Other aspects and preferred embodiments of the invention are defined and described in the other claims set out below.

### Brief Description of the Figures

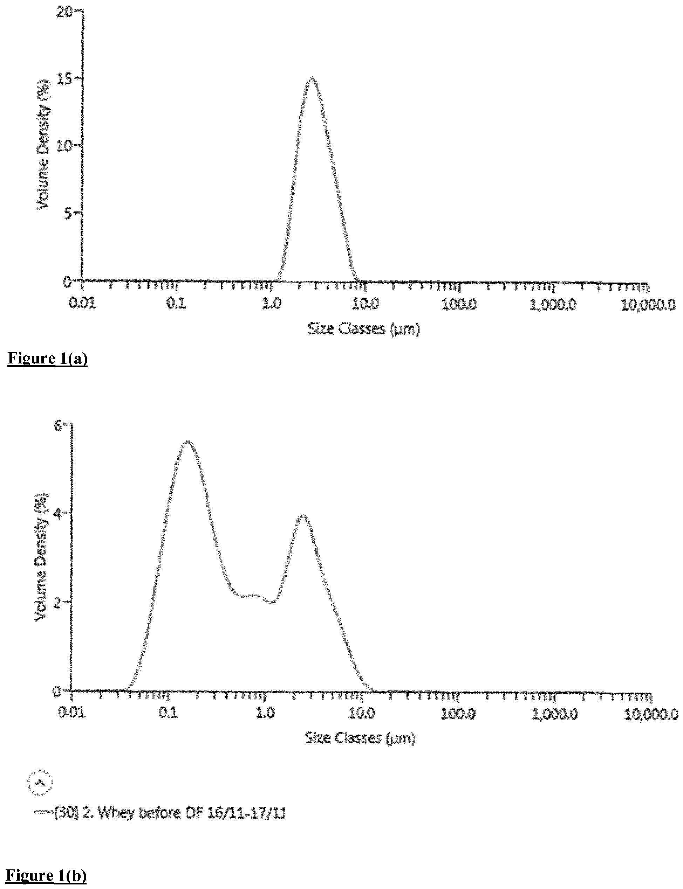

**Figure 1(a)**. Particle size distribution of whey protein concentrate subjected to ultrafiltration, diafiltration and microparticulation. Particle size is in the desired range (1-10µm).
**Figure 1(b)****.** Particle size distribution of whey protein concentrate not subjected to ultrafiltration, diafiltration and microparticulation.

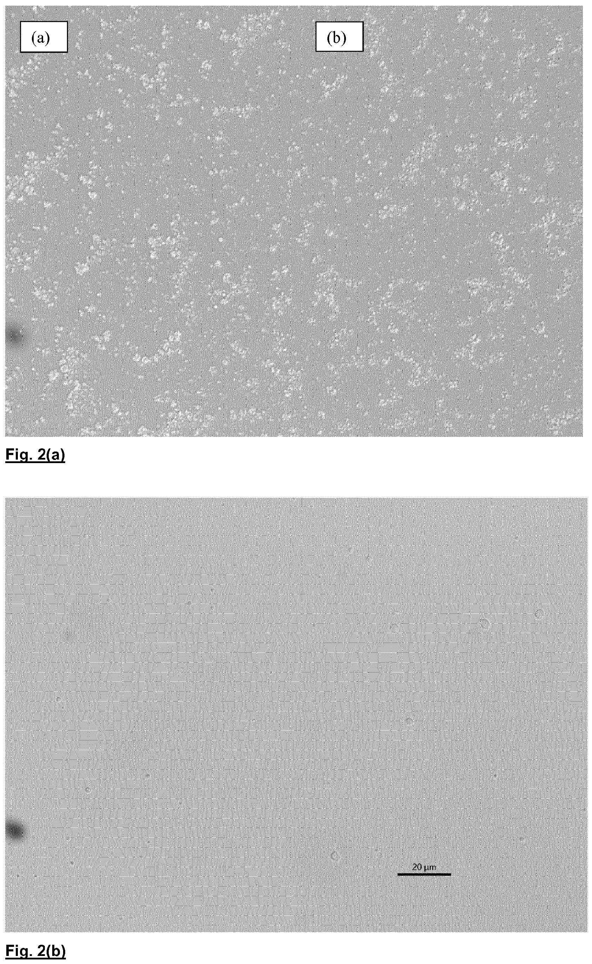

**Figure 2****: (a)** Light micrograph using differential interference contrast microscopy showing aggregated protein structures (spherical particles) in the range 1-10µm formed after the concentrate is subjected to ultrafiltration and microparticulation (b) Light micrograph using differential interference contrast microscopy showing whey protein solution not subjected to microparticulation.
**Figure 3(a)****.** Particle size distribution of a beverage formulation subjected to UHT and containing a 30% w/w dosage of the microparticulated whey concentrate (with diafiltration step). No further increase in size distribution was observed after high heat treatment.
**Figure 3(b)** Particle size distribution of a beverage formulation subjected to UHT and containing a 30% w/w dosage of the microparticulated whey concentrate (no diafiltration step). An increase in size distribution was observed after high heat treatment.

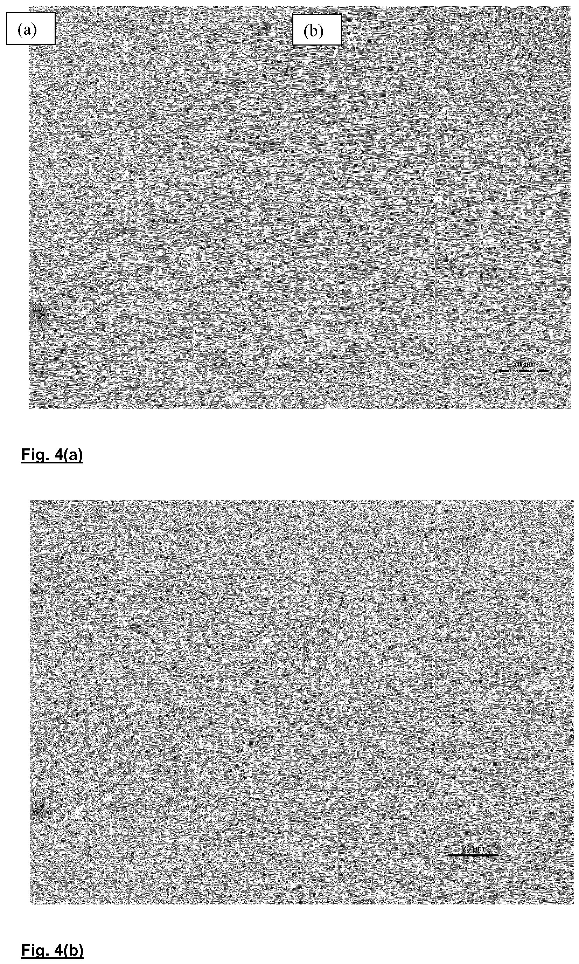

**Figure 4(a)****.** Light micrograph using differential interference contrast microscopy showing protein structures in beverage formulation subjected to UHT and containing a 30% w/w dosage of the microparticulated whey concentrate (with diafiltration step). Small spherical structures remain intact (b) Light micrograph using differential interference contrast microscopy showing protein structures in beverage formulation subjected to UHT and containing a 30% w/w dosage of the microparticulated whey concentrate (without diafiltration step). Aggregation of proteins is observed.

### Detailed Description of the Invention

All publications, patents, patent applications and other references mentioned herein are hereby incorporated by reference in their entireties for all purposes as if each individual publication, patent or patent application were specifically and individually indicated to be incorporated by reference and the content thereof recited in full.

### Definitions and general preferences

Where used herein and unless specifically indicated otherwise, the following terms are intended to have the following meanings in addition to any broader (or narrower) meanings the terms might enjoy in the art:
Unless otherwise required by context, the use herein of the singular is to be read to include the plural and *vice versa.* The term "a" or "an" used in relation to an entity is to be read to refer to one or more of that entity. As such, the terms "a" (or "an"), "one or more," and "at least one" are used interchangeably herein.

As used herein, the term "comprise," or variations thereof such as "comprises" or "comprising," are to be read to indicate the inclusion of any recited integer (e.g. a feature, element, characteristic, property, method/process step or limitation) or group of integers (e.g. features, element, characteristics, properties, method/process steps or limitations) but not the exclusion of any other integer or group of integers. Thus, as used herein the term "comprising" is inclusive or open-ended and does not exclude additional, unrecited integers or method/process steps.

As used herein, the term "liquid whey protein concentrate" refers to a whey concentrate in liquid form, for example whey protein concentrate (WPC) or a modified form of WPC such as delactosed whey protein concentrate, that has at least 5% protein (w/v). In one embodiment, the liquid WPC has a protein concentration of 5-15%, about 9-13%, about 9-11% or about 10%.

The concentrated whey may be obtained by membrane filtration of cheese whey, or by reconstitution of a concentrated whey powder such as WPC powder. In one embodiment, the term includes dairy streams that contain significant amounts of whey, for example milk protein concentrate.

As used herein, the term "microparticulation" refers to a process where whey proteins, by heat treatment, are denaturated and aggregated, i.e. are lumped together, where after the aggregations, as a result of mechanical processing, are divided into smaller particles. As a result of microparticulation, a product will be obtained which can be employed in many different food products. The denaturated whey protein will have another flavour and a different appearance from the original whey protein, which also contributes to the increasing use of whey protein in the food industry. It will be of high protein content and made entirely from milk proteins. In one embodiment, the microparticulation step is carried out at a temperature of about 83°C for a time of 90 seconds. It will be appreciated that the time and temperature may be varied, for example a longer time with a lower temperature, and such variations will be apparent to the person skilled in the art.

As used herein, the term "microparticulated whey protein product" refers to a whey protein ingredient, for example microparticulated WPC, made according to the process of the invention and including a diafiltration step prior to the microparticulation step. The microparticulated whey protein generally has an average whey particle size in the 1-10 micron range, and is generally capable of maintaining that average size range after UHT treatment.

As used herein, the term "diafiltration" refers to a process in which the liquid whey product is initially diluted, and then re-concentrated by, for example, a membrane filtration process. In one embodiment, the process involves diluting the liquid WPC with water and then ultrafiltration of the diluted WPC. Typically, the WPC is diluted to a liquid whey protein concentration level (i.e. the concentration prior to microfiltration/ultrafiltration), and then subjected to ultrafiltration until the protein concentration is raised back to the pre-dilution level. The effect of diafiltration prior to microparticulation is a reduction in the level of lactose and minerals in the whey stream, allowing a greater level of protein denaturation to be achieved during microparticulation, and thereby reducing the propensity of the microparticulated whey to denature and aggregate during subsequent heat processing.

As used herein, the term "ultra-high temperature" or "UHT" refers to a heat treatment commonly applied to beverages and liquids that is considered to be sufficient to kill spores in milk. The time and temperature employed in UHT treatments may vary slightly, with temperatures in the range of 130-140°C being common. In many countries, UHT treatments involve 138°C x 4 seconds. UHT treatments may involve direct heating, where the product comes into direct contact with steam (i.e. by injection or infusion), or indirect heating, where the product and heating medium remain separate (i.e. plate exchangers, tubular exchangers, and scraped surface exchangers).

"Liquid nutritional product" refers to a protein-containing product to be administered by mouth or other means (i.e. feeding tube) to the stomach of a person, and that is suitable for being treated by UHT. Examples include dairy drinks, drinking yoghurts, smoothies, fruit juices, yoghurts, enteral drinks, spreads, liquid cheese, soups, sauces, stews, nutritionally complete liquid formulations, food for special medical purposes, and other products and beverages.

As used herein, the "UHT stable" as applied to a liquid nutritional product or microparticulated whey protein product means that the whey particles in the beverage or product will not lose their structure and size as a result of UHT treatment to the extent that the organoleptic properties of the beverage or product change significantly. As evidenced herein, the microparticulated whey protein produced according to the method of the invention has an average particle size prior to UHT treatment, which is substantially the same as the average particle size after UHT treatment, which means that the organoleptic properties of the microparticulated whey will not be lost as a result of heat treatment.

### Exemplification

The invention will now be described with reference to specific Examples. These are merely exemplary and for illustrative purposes only: they are not intended to be limiting in any way to the scope of the monopoly claimed or to the invention described. These examples constitute the best mode currently contemplated for practicing the invention.

### Materials and Methods

### Light microscopy:

Samples were examined using an Olympus BX51 light microscope (Olympus BX-51, Olympus Corporation, Tokyo, Japan) under a 60× oil objective lens using bright field and differential interference contrast (DIC). Images were taken using a Jenoptik C14 Imagic camera, and captured and analysed using Image Access Premium®7 software (Wiltshire, UK).

### Particle Size Analysis

Particle size distribution of liquid solutions was measured using a Mastersizer 3000 (Malvern Instruments Ltd., Malvern, UK). The optical parameters used were: refractive indices of 1.46 and 1.33 for sample and dispersant (water), respectively, and particle absorbance of 0.01. A drop of liquid was added to the wet cell of the instrument and various size characteristics were determined. Shown in this document is the volume distribution graph

### Manufacture of Microparticulated WPC

Liquid whey was taken from cheesemaking. It was subjected to ultrafiltration (MTL pilot plant membrane facility) using 10kDa membranes. It was concentrated to approx. 17% dry matter or 10% protein concentration. This concentrated solution was then subjected to microparticulation using a GEA microparticulation unit with the following conditions: 83C for 90s, flow rate 500L/hour

With the diafiltration process included a step was inserted after concentration and before microparticulation. This was the addition of reverse osmosis water into the tank containing the retentate (concentrated whey). The amount added was the amount required to bring the tank back up to the original volume of liquid that was in the tank before concentration. The altered liquid solution was then ultrafiltered as before until a volume was reached. This volume was the volume in the tank before the water was added (i.e the volume which had been ultrafiltered once and reached the protein concentration of 10%). This would be considered in the industry as one full diafiltration step and would be common for other processes but not for a microparticulation process

### Manufacture of 20% microparticulated WPC beverage

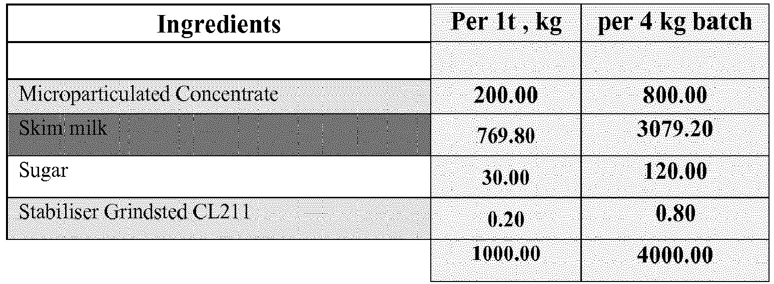

### Manufacture of 30% microparticulated WPC beverage

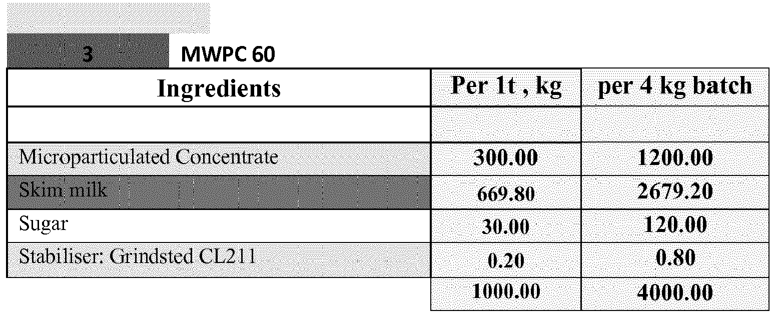

### UHT treatment of beverages

UHT treatment was carried out using a tubular heat exchanger (Microthermics) where the final heating was 138C for 4 seconds. The process is outlined below Preheat to 70°C
UHT 137°C, 4 sec
Cooling to 65-70°C
Downstream homogenization 200/50 Bar
Cooling to 20°C

### Equivalents

The foregoing description details presently preferred embodiments of the present invention. Numerous modifications and variations in practice thereof are expected to occur to those skilled in the art upon consideration of these descriptions. Those modifications and variations are intended to be encompassed within the claims appended hereto.

## Claims

1. A process for making a microparticulated whey protein concentrate, comprising the steps of
providing a liquid whey protein concentrate (WPC);
subjecting the liquid WPC to microparticulation to provide a microparticulated WPC; and
optionally, drying the microparticulated WPC,
**characterised in that** the liquid WPC is subjected to diafiltration prior to microparticulation.

2. A process according to Claim 1, in which the liquid whey protein concentrate has a protein concentration of 9-13% (w/v).

3. A process as claimed in Claim 1 or 2 in which the process comprises an initial step of concentration of a liquid whey by microfiltration or ultrafiltration to provide the liquid WPC, or reconstitution of a WPC powder to provide the liquid WPC.

4. A process as claimed in any preceding Claim, in which the microparticulation step is carried out at a temperature of about 83°C for a time of about 90 second.

5. A process as claimed in any preceding Claim, in which the diafiltration step comprises diluting the liquid WPC with water, and then re-concentration of the diluted liquid WPC by membrane filtration until the protein concentration is raised back to the liquid WPC level.

6. A process according to any preceding Claim, in which the average particle size of whey particles in the microparticulated WPC is 1-10 µm.

7. A process for making a UHT-treated liquid nutritional product comprising the steps of:
providing a microparticulated WPC according to a process of any of Claims 1 to 6
mixing the microparticulated WPC with one or more additional ingredients to provide a liquid nutritional product; and
UHT treating the liquid nutritional product to provide a UHT-treated liquid nutritional product.

8. A process according to Claim 7, in which the UHT beverage comprises 5 to 30 % microparticulated WPC (

9. A microparticulated WPC formed according to a process of any of Claims 1 to 6.

10. A microparticulated WPC **characterised in that** it has an average particle size of whey particles of 1-10 µm.

11. A microparticulated WPC according to Claim 9 or 10, in which:
the microparticulated WPC is in liquid form and comprises 9-13% whey protein (w/v); or
the microparticulated WPC is in powder form and has comprises at least 80 % whey protein (w/w).

12. A UHT-treated liquid nutritional product comprising a microparticulated WPC according to any of Claims 9 to 11.

13. A UHT-treated liquid nutritional product according to Claim 12, comprising 5 to 30 % microparticulated WPC on a dry matter basis.

14. A UHT-treated liquid nutritional product according to Claim 12 or 13, in which the beverage additionally comprises one or more of:
an additional protein source;
a carbohydrate; and
a lipid.

15. A UHT-treated liquid nutritional product according to any of Claims 12 to 14, in which the beverage is shelf-stable for at least 6 months.
